# EUROPEAN PATENT SPECIFICATION

(11) **EP 3 062 068 B1**
(45) Date of publication and mention of the grant of the patent: **06.01.2021**
(21) Application number: 15156807.8
(22) Date of filing: 26.02.2015
(51) Int. Cl.: G01D 5/20, G01P 3/49

(54) **Contactless sensor**
Berührungsfreie Sensorik
Capteur sans contact

(43) Date of publication of application: 31.08.2016
(73) Proprietor: Tyco Electronics Belgium EC BVBA, 8020 Oostkamp (BE)
(72) Inventor: Ocket, Tom, 8820 Torhout (BE); Weiss, Alexander, 8600 Keiem (BE); Colman, Guus, 9940 Ertvelde (BE)
(74) Representative: Patentanwaltskanzlei WILHELM & BECK

(56) References cited:
- EP-A1- 2 434 295
- WO-A1-2014/020670
- US-A- 3 439 256

## Description

US 2008/0079420 A1 discloses a contactless eddy current sensor, particularly for detecting essentially flat test objects, comprising at least one sensor coil, eddy currents being able to be induced in the test object.

WO 2014/020670 A1 discloses a compact magnetic reflective sensor with an excitation coil and with a reception coil that are arranged in a predetermined angle with regard to a longitudinal axis of the sensor.

EP 2 434 295 A1 discloses a contactless sensor for detecting a position and/or a speed of an object. The contactless sensor comprises a first sensor coil that is embodied to generate an electromagnetic field that induces eddy currents in an object. The first sensor coil is arranged at a front end of the longitudinal sensor. Furthermore, a second sensor coil is embodied to sense the electromagnetic field of the first sensor coil, wherein the second sensor coil is arranged at the front end of the longitudinal sensor.

The object of the present invention is to provide an improved contactless sensor.

The object is attained by the contactless sensor according to claim 1, an apparatus according to claim 3 and a method for detecting an object according to claim 5.

Further embodiments are disclosed in the dependent claims.

The sensor comprises a first sensor coil that is embodied to generate an electromagnetic field that induces eddy currents in an object, wherein the first coil is arranged at a front end of a longitudinal sensor. The sensor comprises a second sensor coil that is embodied to sense the electromagnetic field of the first sensor coil, wherein the second sensor coil is arranged at the front end of the longitudinal sensor.

The first sensor coil defines a first coil axis, wherein the first coil axis is arranged in an angle between 30° and 85° with respect to a longitudinal axis of the sensor. This arrangement allows a high sensitivity with a compact design.

The second sensor coil defines a second coil axis, wherein the second coil axis is arranged in an angle between 30° and 85° with respect to a longitudinal axis of the sensor. This arrangement allows a high sensitivity with a compact design.

The first coil and the second coil are arranged in a mirror inverted position with regard to a middle plane, wherein a middle axis of the sensor is part of the middle plane. This allows a compact design.

An apparatus is provided, wherein a receiving hole for the sensor has the same cross-sectional area as the sensor, particularly a circular cross-sectional area. This provides a precise alignment of the longitudinal sensor in the apparatus.

The apparatus is a turbo housing of a turbo charger and the object is a blade of a rotor of the turbo charger. The rotor and the blades rotate around a first axis. The first sensor coil axis when passing the object is aligned in such a manner so as to be arranged with an angle between 30° and 85° to a first plane that is defined by the first axis and the longitudinal middle axis of the sensor particularly with an angle between 65° and 75° to the first plane. This allows a precise sensing of the position and/or the speed of a blade.

In an embodiment the apparatus and the sensor comprise fixing features for aligning the sensor with regard to the apparatus in a predetermined rotatory orientation of the sensor coil.

Therefore a precise position of the sensor coil referring to an object is attained.

A method for detecting a thin object with a contactless eddy current sensor is disclosed, wherein the eddy current sensor comprises a first sensor coil, wherein the first sensor coil generates an electromagnetic field, wherein the eddy current sensor comprises a second sensor coil that senses the electromagnetic field that is generated by the first sensor coil, wherein in an object that is relatively moved with regard to the first sensor coil nearby the first sensor coil eddy currents are induced in the object changing the electromagnetic field, wherein the second sensor coil senses the change of the electromagnetic field and therefore the second sensor coil senses the passing by of the object. The method is precise.

The sensor, the apparatus and the method for sensing an object will be described in more detail hereinbelow with the aid of exemplary embodiments with reference to the accompanying drawings.
Fig. 1 shows an apparatus with a contactless sensor,
Fig. 2 shows a first sensor,
Fig. 3 shows a second sensor,
Fig. 4 shows a schematic view of a sensing situation,
Fig. 5 shows a schematic view of a second sensing situation,
Fig. 6 shows a perspective view of a tip of a sensor within the hole of the apparatus, and
Fig. 7 shows a perspective view of a sensor.

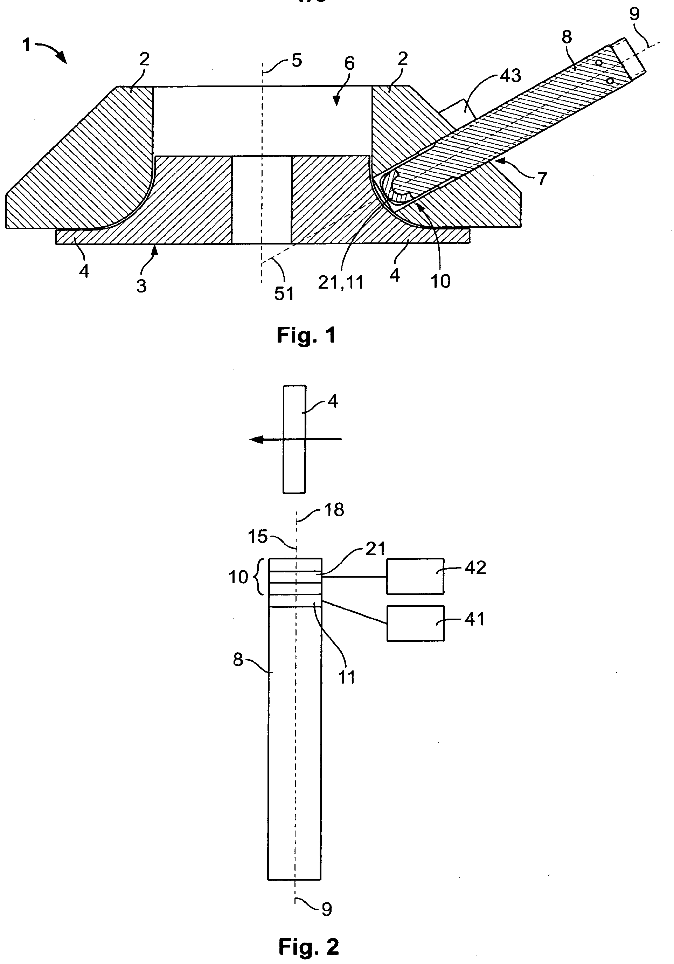

Fig. 1 shows a cross-sectional view of an apparatus that is embodied as a turbo charger 1. The turbo charger 1 comprises a housing 2, a turbo rotor 3 with several blades 4. The turbo rotor 3 is arranged in a chamber 6 of the housing 2 and rotatable fixed to a first axis 5. The blades 4 comprise a flat shape and extend radially with regard to the first axis 5. The thin bodies of the blades 4 are arranged perpendicular to the first axis 5. The housing 2 comprises a mounting hole 7 that is guided from outside to the chamber 6. In the hole 7 a sensor 8 is arranged. The sensor 8 is fixed by fixing means 43 to the housing 2 in a predetermined rotational position referring to the hole 7. The fixing means 43 may be embodied as a form-fit and/or press-fit means. For example the fixing means may be a bolt and a thread or a partition wall and a nut.

The sensor 8 is embodied as a contactless sensor for detecting an object especially a thin object. A front end 10 of the sensor 8 is arranged nearby the opening of the hole 7 to the chamber 6. The sensor 8 comprises a longitudinal middle sensor axis 9. The sensor 8 has a longitudinal shape that projects from the hole 7 to the outside of the housing 2. The sensor axis 9 is arranged radially to the first axis 5 and the sensor axis 9 is arranged in a first plane that comprises the first axis 5. As a result, a blade 4 that rotates around the first axis is arranged in parallel to a first plane 51 when the blade 4 is in a central position with regard to the hole 7 as shown in Fig. 1. The first plane 51 is defined by the first axis 5 and the longitudinal middle axis 9 of the sensor 8. The cross-section of Fig. 1 is defined by the first plane 51.

Fig. 2 discloses a schematic view of a sensor 8 for sensing the moving by of an object 4.The object may be embodied as a blade 4 of a turbo rotor that rotates by the sensor 8. The sensor 8 is arranged in the housing as discussed above. At a front end 10 of the sensor 8 a first sensor coil 11 and a second sensor coil 21 are arranged. The first sensor coil 11 is connected with an A/C voltage or current source 41. The A/C current source 41 provides an alternative current to the first sensor coil 11, so that the first sensor coil 11 generates an electromagnetic field. The second sensor coil 21 is connected with a sensing circuit 42. The first sensor coil 11 functions as an electromagnetic sender. The second sensor coil 21 functions as an electromagnetic receiver. The second sensor coil 21 receives the electromagnetic field that is generated by the first sensor coil 11. The receiving of the electromagnetic field is sensed by the sensing circuit 42. The first sensing coil 11 and the second sensing coil 21 comprise a first and second coil axis 15, 18 that are in line with the longitudinal sensor axis 9. The second sensing coil 21 is arranged closer to the blade 4 than the first sensing coil 11. Depending on the used embodiment, the object 4 may be fixed and the sensor 8 with the first and the second sensor coils 11, 21 may be moved passing by the object 4.

If an object for example a blade 4 passes by the sensor 8, then the electromagnetic field that is generated by the first sensor coil 11 is changed by the eddy current that is generated on the surface of the blade 4. The change of the electromagnetic field is sensed by the second sensor coil 21 and the sensing circuit 42. The sensing circuit 42 may comprise a capacitor to increase the sensitivity to a single frequency of the received electromagnetic field. Furthermore, the sensing circuit 42 may comprise a non-linear element to change the frequency to select the change of the received signal. Furthermore, the sensing circuit 42 may comprise a low pass filter to keep only a low-frequent information. For example a change of amplitude of voltage and/or a change of amplitude of current is monitored by the sensing circuit 42 to detect the presence of an object. Furthermore a change of phase of current and/or a change of phase of voltage is monitored by the sensing circuit 42 to detect an object.

There may reference values for a change of amplitude or for a change of phase of voltage and/or current be stored in the sensing circuit 42 that correspond to the presence of an object. There may reference values for a change of amplitude or for a change of phase of current be stored that correspond to the presence of an object. The sensing circuit 42 detects an object if the measured value corresponds to the reference value or is higher than the reference value. As a result, the second sensor coil 21 measures a mutual coupling.

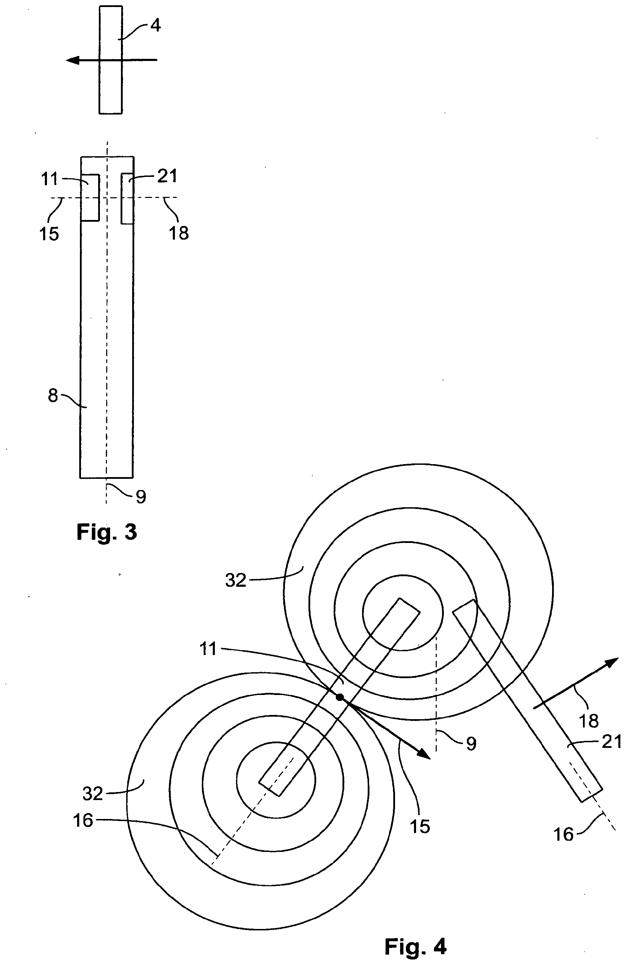

Fig. 3 depicts a further sensor 8 with the first and the second sensor coil 11, 21, wherein in this embodiment the coil axis 15,18 of the first and the second sensor coils are arranged with an angle of 90° with regard to the sensor axis 9 of the sensor 8. Also this embodiment provides a small and compact design of the sensor, wherein the first and the second sensor coil 11, 21 are arranged nearby the front end 10 of the sensor 8.As discussed, the first and the second sensor coils 11, 21 may also be arranged in a predetermined angle referring to the sensor axis 9 of the sensor 8.

Fig. 4 depicts a schematic drawing of a sensor 8, wherein the first and the second sensor coils 11, 21 are schematically shown with a predetermined angle of about 30 to 85° referring to the longitudinal sensor axis 9 of the sensor 8. The first sensor coil 11 generates the electromagnetic field 32 that is schematically depicted as circles. The second sensor coil 21 is arranged within the electromagnetic field 32. The second sensor coil 21 receives a specific voltage depending on the electromagnetic field 32 that is generated by the first sensor coil 11.Fig. 4 depicts the situation that there is no further object 4 in the area of the first and second sensor coil 11,21.

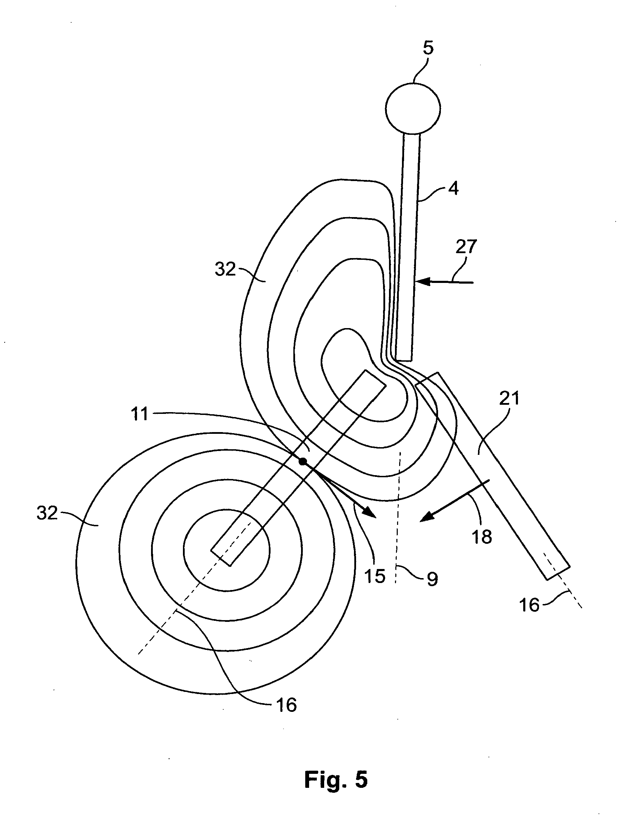

Fig. 5 depicts the arrangement of Fig. 4, wherein an object 4, for example a blade 4 of a turbo rotor 3 is arranged within the electromagnetic field 32. The blade 4 is moved in a rotation direction 27. In this case, the shape of the electromagnetic field 32 is changed by the presence of the object 4. Therefore the second sensor coil 21 senses a different voltage compared to the situation of fig. 4. This signal can be used to detect the presence of the blade 4.

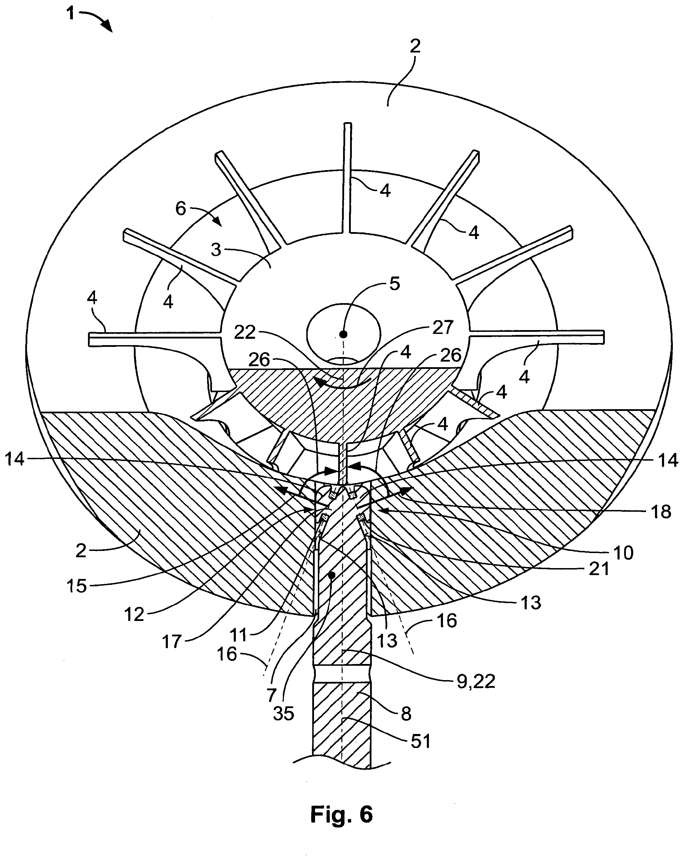

Fig. 6 shows a further cross-sectional view of a turbo charger 1 with a turbo rotor 3 with blades 4. The blades 4 rotate in a depicted rotation direction 27. One blade 4 is shown in a middle position with regard to the hole 7 and is therefore arranged on the middle plain 22 that is defined by the first axis 5 and the longitudinal middle axis 9 of the sensor 8. The first sensor coil 11 defines a coil axis 15 that is arranged vertical to a coil plane 16 that is depicted with a dashed line. The coil plane 16 is defined by the circular ring of the wound wire of the sensor coil 11. The coil plane 16 is arranged with 90° with regard to the coil axis 15.

At the front end 10 of the sensor 8 the first coil 11 is disposed. The first sensor coil 11 is arranged on a coil bobbin 12 that comprises a bottom plane 13, a stud 17 that connects the bottom plane 13 with a cover plate 14. The stud cannot be seen, because wire of the coil 11 is wound around the stud. The bottom plane 13 is a flat plane that is disposed on the front end 10 of the sensor 8. The bottom plane 13 is arranged in a predetermined angle with respect to the sensor axis 9. Depending on the used embodiment, the angle between the bottom plane 13 and the longitudinal axis may be between 30° and 85° or particularly between 65° and 75°. In the shown embodiment, the sensor 8 has a circular cross-sectional area. The hole 7 also has at least partly a circular cross-sectional area. However the radius of the circular cross-sectional area of the hole 7 is a bit larger than the radius of the cross-sectional circular area of the sensor 8. Thus the sensor 8 is guided by the hole 7 and aligned according to a predetermined angle with regard to the fist axis 5.

In the shown embodiment, the sensor coil 11 is arranged in such a manner that the coil axis 15 is aligned with regard to the plane of the blade 4 with an angle 26 of 60°. Depending on the used embodiment, the sensor coil 11 may be arranged in such a manner that the coil axis 15 is arranged with regard to the plane of the blade 4 in an area between 55° and 85°, particularly in an area between 60° and 75°. Experiments have shown that with this alignment of the sensor coil 11 higher eddy currents are generated in when passing of the blade 4. In turbo chargers for example the blades are made out of aluminum. When the sensor coil 11 is arranged in such a way that the coil axis 15 is put at an angle of 0°, there are only eddy currents flowing at a surface of the blades. But this surface has only a thickness of around 1 mm. When the arrangement of the sensor coil 11 is changed to a greater angle, for example an angle up to 50° or 80°, then the magnetic fields of the sensor coil go more through a deeper thickness of the surface of the blades 4. Therefore higher eddy currents are generated and thus a bigger variation of voltage and/or current are seen in the secondary coil Furthermore the inclined arrangement of the sensor coil 11 allows an increased diameter of the sensor coil within the given thickness of the sensor 8.

The first coil and the second coil are in one embodiment arranged in a mirror inverted position with regard to a middle plane 22 in the shown embodiment. The middle plane 22 is arranged in the first plane 51. Depending on the used embodiment the first and second coils 11, 21 may also be arranged with different angles referring to the longitudinal axis 9 of the sensor. In the shown embodiment, the first sensor coil and second sensor coil are arranged on the same length of the sensor 8. Depending on the used embodiment, the first and the second sensor coil may also be arranged at different lengths of the sensor 8. The second coil 21 may have the same design as the first coil 11. Furthermore the second coil may have a different design as the first coil 11.

Cover plates 14 of the first and the second sensor coils 11, 21 abuts at the wall of the hole 7. Therefore, the sensor 9 is precisely aligned by the hole 7. Additionally, the cover plate 14 of the first and/or the second sensor coil 11, 21 may comprise along the longitudinal axis 9 at a front a round shape. The round shape of the front allows an easy mounting of the sensor 8 in the hole 7. Additionally the cover plate 14 of the first and/or the second sensor coil 11, 21 may also comprises a round shape in a plane perpendicular to the longitudinal axis 9. Furthermore the tip of the sensor with the first and second sensor coils may be embedded in a tip housing that protects the sensor coils. The tip housing may be made of plastics.

As depicted in the embodiment of Fig. 6, at the front end 10 the distance between the outer shapes of the first and the second sensor coil 11, 21 have a round shape, for example a partial circular shape. At the front end 10 the distance between the cover plates 14 of the first and the second sensor coil 11, 21 is larger than the thickness of an adjacent section 35 of the sensor 8.

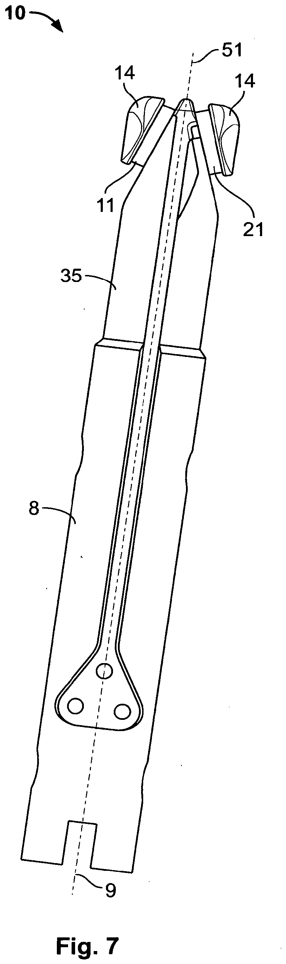

Fig. 7 shows a perspective view of a sensor 8, wherein the middle plane 21 is depicted that is arranged within the longitudinal middle axis 9 of the sensor 8. The first and the second sensor coils 11, 21 are arranged mirror inverted with regard to the middle plane 21. The middle plane 21 may be arranged in parallel with a plane of a blade 4 that is in a middle position of the hole 7.

### Reference list

- 1: turbo charger
- 2: housing
- 3: turbo rotor
- 4: blade
- 5: first axis
- 6: chamber
- 7: hole
- 8: sensor
- 9: sensor axis
- 10: front end
- 11: sensor coil
- 12: coil bobbin
- 13: bottom plane
- 14: cover plate
- 15: coil axis
- 16: coil plane
- 17: stud
- 18: second coil axis

- 21: second sensor coil
- 22: middle plane

- 26: angle
- 27: rotation direction
- 28: permanent magnet

- 32: field
- 35: section

- 41: current source
- 42: sensing circuit
- 43: fixing means
- 51: first plane

## Claims

1. A contactless sensor (8) for detecting a position and/or a speed of an object (4), comprising:
a first sensor coil (11) that is embodied to generate an electromagnetic field that induces eddy currents in the object (4), wherein the first coil (11) is arranged at a front end of a longitudinal sensor (8),
a second sensor coil (21) that is embodied to sense the electromagnetic field of the first sensor coil (11), wherein the second sensor coil (21) is arranged at the front end of the longitudinal sensor (8), wherein the first sensor coil (11) defines a first coil axis (15), wherein the first coil axis (15) is arranged in an angle between 30° and 85° with respect to a longitudinal middle axis (9) of the sensor (8), wherein the second sensor coil (21) defines a second coil axis (18), wherein the second coil axis (18) is arranged in an angle between 30° and 85° with respect to a longitudinal middle axis (9) of the sensor (8), wherein the first sensor coil (11) and the second sensor coil (21) are arranged in a mirror inverted position with regard to a middle plane (21), wherein a longitudinal middle axis (9) of the sensor (8) is part of the middle plane (21).

2. Sensor of claim 1, wherein the second sensor coil (21) is constructed identically to the first sensor coil (11) .

3. Apparatus with a receiving hole (7) comprising
- a turbo rotor (2) with blades (4), wherein the rotor (3) with blades (4) rotates around a first axis (5),
- a contactless sensor (8) according to one of the claims 1 or 2 for detecting a position and/or a speed of a blade (4), said contactless sensor (8) comprising:
a first sensor coil (11) that is embodied to generate an electromagnetic field that induces eddy currents in the blade (4), wherein the first coil (11) is arranged at a front end of a longitudinal sensor (8), a second sensor coil (21) that is embodied to sense the electromagnetic field of the first sensor coil (11), wherein the second sensor coil (21) is arranged at the front end of the longitudinal sensor (8), wherein the receiving hole (7) has a same cross-sectional area as the sensor (8), a circular cross-sectional area defining a longitudinal alignment of the longitudinal sensor, with a turbo housing (2) of a turbo charger (1), wherein the first sensor coil axis (15) and the second sensor coil axis (18) are arranged in such a way that when the blade (4) passing the sensor (8) the first and second sensor coil axes (15,18) are arranged with an angle between 30° and 85° to a first plane (51) that is defined by the first axis (5) and the longitudinal axis (9) of the sensor , particularly between 65° and 75° to the first plane (51).

4. Apparatus of claim 3, wherein the apparatus (1) and the sensor (8) comprise fixing features (43) for fixing the sensor (8) with regard to the apparatus (1) in a predetermined rotational orientation of the sensor coils (11, 21).

5. A method of detecting a thin object with a contactless sensor according to one of the claims 1 or 2, wherein the sensor comprises a first sensor coil, wherein the first sensor coil generates an electromagnetic field, wherein the sensor comprises a second sensor coil that senses the electromagnetic field that is generated by the first sensor coil, wherein when an object is relatively moved with regard to the first sensor coil nearby the first sensor coil eddy currents are induced in the object changing the electromagnetic field, wherein the second sensor coil senses the change of the electromagnetic field and therefore the second sensor coil senses the passing by of the object, wherein the first sensor coil defines a first coil axis, wherein the object and the first sensor coil are arranged and moved in a way relatively to each other that the first sensor coil axis when passing the object is aligned in such a manner so as to be arranged with an angle between 30° and 85° to a surface of the object.

6. Method of claim 5, wherein a change in amplitude of voltage and/or current is measured in the second coil to detect the object.

7. Method of claim 5 or 6, wherein a change in phase of voltage and/or current is measured to detect an object.

8. Method of one of the claims 5 to 7, wherein the first sensor coil and the second sensor coil are arranged at a tip of the sensor.

9. A method of any one of the claims 5 to 8, wherein the object and the first sensor coil are arranged and moved in that way relatively to each other that the first sensor coil axis when passing the object is aligned in such a manner so as to be arranged with an angle between 65° and 75° to a surface of the object.

## Patentansprüche

1. Berührungsfreier Sensor (8) zum Erkennen einer Position und/oder einer Geschwindigkeit eines Objekts (4), umfassend
eine erste Sensorspule (11), die dazu ausgebildet ist, ein elektromagnetisches Feld zu erzeugen, das Wirbelströme in dem Objekt (4) induziert, wobei die erste Spule (11) an einem vorderen Ende eines Längssensors (8) angeordnet ist,
eine zweite Sensorspule (21), die dazu ausgebildet ist, das elektromagnetische Feld der ersten Sensorspule (11) zu erfassen, wobei die zweite Sensorspule (21) am vorderen Ende des Längssensors (8) angeordnet ist, wobei die erste Sensorspule (11) eine erste Spulenachse (15) definiert, wobei die erste Spulenachse (15) in einem Winkel zwischen 30° und 85° in Bezug auf eine Längsmittelachse (9) des Sensors (8) angeordnet ist, wobei die zweite Sensorspule (21) eine zweite Spulenachse (18) definiert, wobei die zweite Spulenachse (18) in einem Winkel zwischen 30° und 85° in Bezug auf eine Längsmittelachse (9) des Sensors (8) angeordnet ist, wobei die erste Sensorspule (11) und die zweite Sensorspule (21) in einer spiegelverkehrten Position in Bezug auf eine Mittelebene (21) angeordnet sind, wobei eine Längsmittelachse (9) des Sensors (8) Teil der Mittelebene (21) ist.

2. Sensor gemäß Anspruch 1, wobei die zweite Sensorspule (21) identisch mit der ersten Sensorspule (11) ausgeführt ist.

3. Vorrichtung mit einem Aufnahmeloch (7), umfassend
- einen Turborotor (2) mit Schaufeln (4), wobei sich der Rotor (3) mit Schaufeln (4) um eine erste Achse (5) dreht,
- einen berührungsfreien Sensor (8) gemäß einem der Ansprüche 1 oder 2 zum Erkennen einer Position und/oder einer Geschwindigkeit einer Schaufel (4), wobei der berührungsfreie Sensor (8) umfasst:
eine erste Sensorspule (11), die dazu ausgebildet ist, ein elektromagnetisches Feld zu erzeugen, das Wirbelströme in der Schaufel (4) induziert, wobei die erste Spule (11) an einem vorderen Ende eines Längssensors (8) angeordnet ist, eine zweite Sensorspule (21), die dazu ausgebildet ist, das elektromagnetische Feld der ersten Sensorspule (11) zu erfassen, wobei die zweite Sensorspule (21) am vorderen Ende des Längssensors (8) angeordnet ist, wobei das Aufnahmeloch (7) die gleiche Querschnittsfläche wie der Sensor (8) aufweist, einer kreisförmigen Querschnittsfläche, die eine Längsausrichtung des Längssensors definiert, mit einem Turbogehäuse (2) eines Turboladers (1), wobei die erste Sensorspulenachse (15) und die zweite Sensorspulenachse (18) derart angeordnet sind, dass beim Vorbeilaufen der Schaufel (4) am Sensor (8) die erste und die zweite Sensorspulenachse (15, 18) in einem Winkel zwischen 30° und 85° zu einer durch die erste Achse (5) und die Längsachse (9) des Sensors definierten ersten Ebene (51) insbesondere zwischen 65° und 75° zu der ersten Ebene (51) angeordnet sind.

4. Vorrichtung gemäß Anspruch 3, wobei die Vorrichtung (1) und der Sensor (8) Befestigungsmerkmale (43) zum Befestigen des Sensors (8) in Bezug auf die Vorrichtung (1) in einer vorbestimmten Drehausrichtung der Sensorspulen (11, 21) umfassen.

5. Verfahren zum Erkennen eines dünnen Objekts mit einem berührungsfreien Sensor gemäß einem der Ansprüche 1 oder 2, wobei der Sensor eine erste Sensorspule umfasst, wobei die erste Sensorspule ein elektromagnetisches Feld erzeugt, wobei der Sensor eine zweite Sensorspule umfasst, die das durch die erste Sensorspule erzeugte elektromagnetische Feld erfasst, wobei, wenn ein Objekt in Bezug auf die erste Sensorspule in der Nähe der ersten Sensorspule relativ bewegt wird, Wirbelströme in dem Objekt induziert werden, die das elektromagnetische Feld ändern, wobei die zweite Sensorspule die Änderung des elektromagnetischen Feldes erfasst und daher die zweite Sensorspule das Vorbeilaufen des Objekts erfasst, wobei die erste Sensorspule eine erste Spulenachse definiert, wobei das Objekt und die erste Sensorspule so angeordnet sind und relativ zueinander bewegt werden, dass die erste Sensorspulenachse beim Vorbeilaufen des Objekts so ausgerichtet ist, dass sie in einem Winkel zwischen 30° und 85° zu einer Fläche des Objekts angeordnet ist.

6. Verfahren gemäß Anspruch 5, wobei eine Änderung der Amplitude von Spannung und/oder Strom in der zweiten Spule gemessen wird, um das Objekt zu erkennen.

7. Verfahren gemäß Anspruch 5 oder 6, wobei eine Änderung der Phase von Spannung und/oder Strom gemessen wird, um ein Objekt zu erkennen.

8. Verfahren gemäß einem der Ansprüche 5 bis 7, wobei die erste Sensorspule und die zweite Sensorspule an einer Spitze des Sensors angeordnet sind.

9. Verfahren gemäß einem der Ansprüche 5 bis 8, wobei das Objekt und die erste Sensorspule so angeordnet und relativ zueinander bewegt werden, dass die Achse der ersten Sensorspule beim Vorbeilaufen am Objekt so ausgerichtet ist, dass sie in einem Winkel zwischen 65° und 75° zu einer Fläche des Objekts angeordnet ist.

## Revendications

1. Capteur (8) sans contact destiné à détecter une position et/ou une vitesse d'un objet (4), comportant :
une première bobine (11) de capteur qui est concrétisée pour générer un champ électromagnétique qui induit des courants de Foucault dans l'objet (4), la première bobine (11) étant disposée à une extrémité avant d'un capteur longitudinal (8),
une seconde bobine (21) de capteur qui est concrétisée pour détecter le champ électromagnétique de la première bobine (11) de capteur, la seconde bobine (21) de capteur étant disposée à l'extrémité avant du capteur longitudinal (8), la première bobine (11) de capteur définissant un axe (15) de première bobine, l'axe (15) de première bobine étant disposé suivant un angle compris entre 30° et 85° par rapport à un axe médian longitudinal (9) du capteur (8), la seconde bobine (21) de capteur définissant un axe (18) de seconde bobine, l'axe (18) de seconde bobine étant disposé suivant un angle compris entre 30° et 85° par rapport à un axe médian longitudinal (9) du capteur (8), la première bobine (11) de capteur et la seconde bobine (21) de capteur étant disposées dans une position inversée en miroir par rapport à un plan médian (21), un axe médian longitudinal (9) du capteur (8) faisant partie du plan médian (21).

2. Capteur selon la revendication 1, la seconde bobine (21) de capteur étant construite identiquement à la première bobine (11) de capteur.

3. Appareil doté d'un trou (7) de réception, comportant
- un rotor (2) de turbine doté d'aubes (4), le rotor (3) à aubes (4) tournant autour d'un premier axe (5),
- un capteur (8) sans contact selon l'une des revendications 1 et 2 destiné à détecter une position et/ou une vitesse d'une aube (4), ledit capteur (8) sans contact comportant :
une première bobine (11) de capteur qui est concrétisée pour générer un champ électromagnétique qui induit des courants de Foucault dans l'aube (4), la première bobine (11) étant disposée à une extrémité avant d'un capteur longitudinal (8), une seconde bobine (21) de capteur qui est concrétisée pour détecter le champ électromagnétique de la première bobine (11) de capteur,
la seconde bobine (21) de capteur étant disposée à l'extrémité avant du capteur longitudinal (8), le trou (7) de réception présentant la même aire en section droite que le capteur (8), une aire en section droite circulaire définissant un alignement longitudinal du capteur longitudinal, avec un carter (2) de turbine d'un turbocompresseur (1),
l'axe (15) de première bobine de capteur et l'axe (18) de seconde bobine de capteur étant disposés de telle manière que lorsque l'aube (4) défile devant le capteur (8), les axes (15, 18) de première et seconde bobines de capteur sont disposés avec un angle compris entre 30° et 85° par rapport à un premier plan (51) qui est défini par le premier axe (5) et l'axe longitudinal (9) du capteur, particulièrement entre 65° et 75° par rapport au premier plan (51).

4. Appareil selon la revendication 3, l'appareil (1) et le capteur (8) comportant des détails (43) de fixation servant à fixer le capteur (8) par rapport à l'appareil (1) dans une orientation angulaire prédéterminée des bobines (11, 21) de capteur.

5. Procédé de détection d'un objet mince à l'aide d'un capteur sans contact selon l'une des revendications 1 et 2, le capteur comportant une première bobine de capteur, la première bobine de capteur générant un champ électromagnétique, le capteur comportant une seconde bobine de capteur qui détecte le champ électromagnétique généré par la première bobine de capteur, **caractérisé en ce que** lorsqu'un objet est déplacé relativement par rapport à la première bobine de capteur à proximité de la première bobine de capteur, des courants de Foucault sont induits dans l'objet, modifiant le champ électromagnétique, la seconde bobine de capteur détectant la modification du champ électromagnétique et la seconde bobine de capteur détectant par conséquent le défilement de l'objet, la première bobine de capteur définissant un axe de première bobine, l'objet et la première bobine de capteur étant disposés et déplacés l'un par rapport à l'autre de telle façon que l'axe de première bobine de capteur, lorsqu'il passe devant l'objet, soit aligné de manière à être disposé suivant un angle compris entre 30° et 85° par rapport à une surface de l'objet.

6. Procédé selon la revendication 5, une variation d'amplitude d'une tension et/ou d'un courant étant mesurée dans la seconde bobine pour détecter l'objet.

7. Procédé selon la revendication 5 ou 6, une variation de phase d'une tension et/ou d'un courant étant mesurée pour détecter un objet.

8. Procédé selon l'une des revendications 5 à 7, la première bobine de capteur et la seconde bobine de capteur étant disposées à un bout du capteur.

9. Procédé selon l'une quelconque des revendications 5 à 8, l'objet et la première bobine de capteur étant disposés et déplacés l'un par rapport à l'autre de telle façon que l'axe de la première bobine de capteur, lorsqu'il passe devant l'objet, soit aligné de manière à être disposé suivant un angle compris entre 65° et 75° par rapport à une surface de l'objet.
